# EUROPÄISCHE PATENTSCHRIFT

(11) **EP 3 358 258 B1**
(45) Veröffentlichungstag und Bekanntmachung des Hinweises auf die Patenterteilung: **04.11.2020**
(21) Anmeldenummer: 18154598.9
(22) Anmeldetag: 01.02.2018
(51) Int. Cl.: A47B 96/02, F24C 15/16

(54) **MÖBEL**
FURNITURE
MEUBLES

(30) Priorität: 06.02.2017 DE 202017100609 U
(43) Veröffentlichungstag der Anmeldung: 08.08.2018
(73) Patentinhaber: Grass GmbH, 6973 Höchst (AT)
(72) Erfinder: Tiefnig, Roland, 9905 Gaimberg (AT); Mair, Simon, 9900 Lienz (AT)
(74) Vertreter: Otten, Roth, Dobler & Partner mbB Patentanwälte

(56) Entgegenhaltungen:
- EP-A1- 1 258 686
- WO-A1-2004/025186
- DE-A1- 10 243 551
- DE-C- 578 161
- DE-U1- 8 701 330
- NZ-A- 543 764
- US-A- 316 294
- US-A- 1 893 805
- US-A1- 2014 191 646

## Beschreibung

### Stand der Technik

Möbel mit einem Korpus und einer Vorrichtung zur Anbringung eines Trägerelements für Gegenstände in einem Korpus sind bereits bekannt. Die Dokumente EP 1 258 686 A1, DE 578 161 und US 1 893 805 zeigen solche Möbel.

Eine bekannte Vorrichtung umfasst einen Schwenkarm, an welchem ein Tableau, z.B. ein Gargutträger, anordenbar ist, wobei der Schwenkarm an einer Drehachse frontseitig an einer Seitenwand eines Backrohrs eines Ofens derart drehbar gelagert ist, dass ein, an den Schwenkarm angeordnetes Tableau in einer horizontalen Drehbewegung aus einem Innenraum des Backrohrs herausdrehbar ist.

Nachteilig an dieser bekannten Vorrichtung ist der vergleichsweise große Backrohrinnenbereich, welcher für die Drehbewegung notwendig ist.

### Aufgaben und Vorteile der Erfindung

Der Erfindung liegt die Aufgabe zugrunde, ein Möbel mit einer verbesserten Vorrichtung zur Anbringung eines Trägerelements für Gegenstände in einem Korpus bereitzustellen. Insbesondere eine Vorrichtung bereitzustellen, welche es ermöglicht, ein an die Vorrichtung angeordnetes Trägerelement aus einem Innenbereich des Korpus vollständig in einen Außenbereich des Korpus zu bewegen und umgekehrt.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einem Möbel mit einer Vorrichtung zur Anbringung eines Trägerelements für Gegenstände im Korpus des Möbels aus, insbesondere geht die Erfindung von einer Vorrichtung zur Anbringung eines Gargutträgers in einem Ofen aus, wobei die Vorrichtung ein Schwenkorgan zur Anordnung des Trägerelements und Anbringmittel aufweist, wobei mit den Anbringmittel das Schwenkorgan im Korpus an einem Wandabschnitt des Korpus anbringbar ist.

Die Vorrichtung ist vorteilhafterweise als eine Gargutträger-Bewegungseinrichtung oder beispielsweise als eine Herd- oder Ofen-Gargutträger-Bewegungseinrichtung für einen Herd oder Ofen vorhanden. Denkbar ist auch, dass die Vorrichtung als Schubelement- oder Schubladen-Bewegungseinrichtung ausgebildet ist.

Unter einem Korpus wird ein Körper verstanden, welcher einen Raum, insbesondere einen Hohlraum umschließt. Vorteilhafterweise umschließt der Korpus den Hohlraum an fünf Seiten. Denkbar ist weiterhin, dass der Korpus eine Tür und/oder Klappe aufweist, mit welcher der Hohlraum an der sechsten Seite umschließbar ist. Unter einem Korpus ist bspw. ein Möbelkorpus z.B. in Form eines Schranks, eines Sideboards, eines Containers, eines Tisches oder eines Oberschranks zu verstehen. Unter einem Korpus wird aber auch z.B. ein Herd oder Ofen bzw. Backofen, eine Mikrowelle oder bspw. eine Spülmaschine verstanden.

Als ein Trägerelement wird z.B. ein Schubelement verstanden, bspw. ein Gargutträger, z.B. ein Backblech, ein Backgitter oder einen Bräter zur Anbringung an einen Ofen. Als Trägerelement auch angesehen wird beispielsweise ein bewegbarer Schrankboden bzw. ein bewegbares Schrankfach oder z.B. eine Schublade.

Als Wandabschnitt des Korpus ist beispielsweise ein Abschnitt oder Bereich einer Seitenwand, einer Rückwand, einer Oberseite und/oder einer Unterseite des Korpus anzusehen. Vorteilhafterweise umschließt die Seitenwand, die Rückwand, die Oberseite und/oder die Unterseite einen Hohlraum des Korpus. Beispielsweise umfasst eine Seitenwand eine Innenseite, welche dem Hohlraum des Korpus zugewandt ist und den Hohlraum begrenzt. Insbesondere ist die Vorrichtung an einem Bereich oder Abschnitt der Innenseite der Seitenwand und/oder der Rückwand anordenbar.

Der wesentliche Aspekt der Erfindung ist darin zu sehen, dass das Schwenkorgan zwei Schwenkarme umfasst, welche zueinander drehbar vorhanden sind, wobei das Schwenkorgan drei Schwenkachsen aufweist, wobei im montierten Zustand am Korpus ein erster Schwenkarm durch eine erste Schwenkachse drehbar am Korpus angeordnet ist, wobei die beiden Schwenkarme über eine zweite Schwenkachse drehbar aneinander angeordnet sind,
wobei an einem zweiten Schwenkarm eine dritte Schwenkachse vorhanden ist, wobei im Bereich eines Endes des zweiten Schwenkarms das Trägerelement durch die dritte Schwenkachse drehbar zum zweiten Schwenkarm anordenbar ist, und wobei im angeordneten Zustand des Schwenkorgans am Korpus bei einer Schwenk- und/oder Schiebebewegung des Schwenkorgans ein daran angeordnetes Trägerelement in einer einzigen ausschließlich horizontalen Bewegungsebene bewegbar ist, wodurch das an das Schwenkorgan angeordnete Trägerelement sich in den Korpus hinein oder aus diesem heraus bewegen lässt.

Hierdurch ist das Trägerelement vollständig aus dem Korpus, insbesondere aus einem Hohlraum des Korpus heraus- oder in den Korpus, insbesondere den Hohlraum des Korpus hineinbewegbar.

Eine Schwenkachse ist bevorzugterweise senkrecht zu der Bewegungsebene des Schwenkorgans ausgebildet. Die Schwenkachsen sind beispielsweise zueinander parallel ausgerichtet vorhanden. Das Schwenkorgan ist z.B. derart ausgebildet und am Korpus, z.B. im Hohlraum des Korpus, bspw. im Backrohr des Ofens anordenbar, dass das Trägerelement insbesondere ausschließlich in einer translatorischen, z.B. geradlinigen Bewegung, bspw. in einer einzigen horizontalen Ebene, in den Korpus, insbesondere den Hohlraum des Korpus, z.B. ins Backrohr hinein oder aus diesem heraus bewegbar ist. Eine Schwenkachse ist im angeordneten Zustand am Korpus beispielsweise vertikal ausgerichtet vorhanden. Vorteilhafterweise sind die Schwenkachsen im angeordneten Zustand am Korpus parallel zu einer Seitenwand und/oder Rückwand ausgerichtet.

Vorteilhafterweise ist der erste Schwenkarm drehbar an einer ersten Schwenkachse an einem hinteren Bereich eines Hohlraums des Korpus, insbesondere eines Backrohrs eines Ofens angeordnet.

Das Schwenkorgan ist beispielsweise dazu ausgebildet, ein einziges Trägerelement anzuordnen. Vorteilhafterweise umfasst die Vorrichtung zwei Schwenkorgane oder z.B. drei Schwenkorgane, insbesondere mehrere Schwenkorgane. Die Schwenkorgane sind in diesem Fall, beispielsweise in einer vertikalen Richtung beabstandet zueinander vorhanden. Vorteilhafterweise sind mehrere Schwenkorgane in zueinander verschiedenen, insbesondere zueinander beabstandeten Bewegungsebenen an der Vorrichtung vorhanden. Beispielsweise sind die Bewegungsebenen zueinander parallel ausgebildet.

Denkbar ist weiterhin, dass Komponenten der Vorrichtung, insbesondere alle Komponenten aus Metall, Kunststoff und/oder einer Kombination der Materialien ausgebildet sind. Vorstellbar ist weiterhin, dass die Komponenten der Vorrichtung dazu ausgebildet sind unempfindlich und/oder widerstandsfähig bzw. beständig gegenüber vergleichsweise hohen Temperaturen, vergleichsweise hohe Feuchtigkeit und/oder basische Materialien, wie z.B. Seife zu sein.

Das Möbel mit der Vorrichtung, ist vorteilhafterweise pyrolysefähig ausgebildet. Beispielsweise sind alle Teile der Vorrichtung und/oder des Ofens, insbesondere die Lager bzw. Achsen der Vorrichtung derart ausgelegt, dass sie für eine Erhitzung auf über 200°C, insbesondere für eine Erhitzung auf 200°C bis 900°C, beispielsweise für eine Erhitzung über 500°C ausgelegt sind, ohne dass sie ihre Funktion verlieren.

Auch ist es von Vorteil, dass das Schwenkorgan mit einem ersten Ende des ersten Schwenkarms in einem hinteren Drittel eines Hohlraums des Korpus, insbesondere im hinteren Drittel eines Backrohrs des Ofens anordenbar vorhanden ist. Dadurch ist die Vorrichtung vergleichsweise platzsparend vorhanden.

Bevorzugterweise ist das Schwenkorgan an einer Rückwand, einer Seitenwand, einer Oberseite und/oder einer Unterseite des Korpus, beispielsweise des Hohlraums des Korpus, z.B. des Ofens, insbesondere des Backrohrs anordenbar. Vorteilhafterweise ist das Schwenkorgan in einer horizontalen Ebene betrachtet entweder an einem mittleren Bereich oder an einem seitlichen Bereich der Rückwand des Korpus montierbar. Vorstellbar ist auch, dass das Schwenkorgan an einem hinteren Bereich, insbesondere an einem hinteren Drittel des Korpus, z.B. des Hohlraums des Korpus, insbesondere des Backrohrs, anbringbar ist. Denkbar ist, dass das Schwenkorgan an einem hinteren Drittel der Seitenwand, insbesondere der Innenseite der Seitenwand anordenbar ist.

Ebenfalls erweist es sich von Vorteil, dass die Vorrichtung, insbesondere das Schwenkorgan Dämpfungsmittel aufweist, um eine Bewegung der Vorrichtung, insbesondere des angeordneten Trägerelements zu dämpfen.

Die Dämpfungsmittel sind beispielsweise dazu ausgebildet eine Bewegung eines Schwenkarms zu dämpfen bzw. abzubremsen. Ein Dämpfungsmittel ist beispielsweise aus einem elastischen Material ausgebildet, z.B. aus Gummi oder Kunststoff, und/oder als Federmittel vorhanden. Das Dämpfungsmittel kann derart an der Vorrichtung ausgebildet sein, dass es eine Bewegung der Vorrichtung dämpft, indem es zwischen dem Korpus und der angeordneten Vorrichtung wirkt und/oder zwischen Teilen der Vorrichtung wirkt, z.B. zwischen dem ersten und dem zweiten Schwenkarm und/oder zwischen einem Schwenkarm und einem angeordneten Trägerelement. Die Dämpfungsmittel sind insbesondere als Endlagendämpfungsmittel ausgebildet. Vorteilhafterweise sind die Dämpfungsmittel derart ausgebildet, dass eine Bewegung der Vorrichtung zwischen zwei Endlagen, z.B. zwischen einer geschlossenen Position der Vorrichtung im Korpus und einer geöffneten Position der Vorrichtung, z.B. in einer Stellung außerhalb des Korpus, ungedämpft ist und eine Dämpfungswirkung der Dämpfungsmittel erst kurz vor Erreichen der Endlage bspw. der geschlossenen Position oder der geöffneten Position bis zum Erreichen der Endlage erfolgt, sodass eine Bewegung der Vorrichtung und/oder des angeordneten Trägerelements an der Endlage beispielsweise nicht abrupt und/oder stoßartig gebremst ist.

Weiter wird vorgeschlagen, dass zwei Schwenkorgane vorhanden sind, welche zueinander spiegelsymmetrisch am Korpus anordenbar ausgebildet sind.

Umfasst die Vorrichtung zwei Schwenkorgane, welche dazu vorgesehen sind ein einziges angeordnetes Trägerelement zu bewegen, so ist es vorstellbar, dass die beiden Schwenkorgane in einer Weise vorhanden sind, dass sie an der Rückseite der Korpus, insbesondere an der Innenseite der Rückseite in einer insbesondere horizontalen Ebene sich gegenüberliegend und z.B. beabstandet zueinander montierbar sind. Beispielsweise ist ein erstes Schwenkorgan an einer linken Hälfte und ein zweites Schwenkorgan an einer rechten Hälfte der Rückseite anordenbar. Als vorteilhaft erweist sich auch, dass die Vorrichtung eine Synchronisierungseinheit aufweist, welche dazu ausgebildet ist, eine Bewegung der beiden am Korpus angeordneten Schwenkorgane zu synchronisieren. Die Synchronisierungseinheit kann hierzu Zahnräder, Riemen, Gestänge und/oder Zahnstangen umfassen. Beispielsweise ist eine Bewegung der zwei Schwenkorgane, insbesondere sind die beiden Schwenkorgane, im angeordneten Zustand am Korpus mittels eines Gestänges und/oder einer Zahnstange miteinander gekoppelt.

Des Weiteren erweist es sich von Vorteil, dass das Schwenkorgan eine Parallelogrammführung umfasst.

Vorteilhafterweise ist ein Schwenkarm zweigeteilt vorhanden und umfasst zwei Schwenkhebel, insbesondere sind beide Schwenkarme zweigeteilt vorhanden. Weiter ist es bevorzugt, dass ein Schwenkhebel eines Schwenkarms an Enden des Schwenkhebels über Schwenkachsen schwenkbar und/oder drehbar gelagert ist. Das Schwenkorgan umfasst somit drei, beispielsweise sechs, insbesondere acht Schwenkachsen. Weiter ist es bevorzugt, dass zwei Schwenkhebel eines Schwenkarms des Schwenkorgans zusammen mit vier Schwenkachsen ein Parallelogramm, insbesondere eine Parallelogrammführung bilden. Sind beide Schwenkarme als Prallelogrammführungen vorhanden, so ist das Schwenkorgan als eine doppelte Parallelogrammführung ausgebildet. Sind außerdem beispielsweise Bewegungen der beiden Parallelogrammführungen miteinander gekoppelt, kann das an die Vorrichtung angeordnete Trägerelement bei einer Bewegung des Schwenkorgans und damit des Trägerelements eine insbesondere durch die Vorrichtung bzw. die Schwenkarme geführte lineare Bewegung ausführen.

Erfindungsgemäß ist das Schwenkorgan mit dem ersten Ende des ersten Schwenkarms an einer Höhenverstelleinrichtung der Vorrichtung montiert. Hierdurch ist im angeordneten Zustand der Vorrichtung am Korpus eine Position des Trägerelements im angeordneten Zustand an der Vorrichtung in vertikaler Richtung in der Höhe verstellbar vorhanden.

Bevorzugterweise ist die Höhenverstelleinrichtung dazu ausgestaltet an der Rückwand und/oder der Seitenwand des Korpus, beispielsweise an der Innenseite der Rückwand und/oder der Innenseite der Seitenwand, insbesondere des Backrohrs angeordnet zu werden. Vorteilhafterweise ist der erste Schwenkarm drehbar an der Höhenverstelleinrichtung gelagert.

Erfindungsgemäß weist die Höhenverstelleinrichtung ein Raster auf, sodass das Schwenkorgan in verschiedenen Bewegungsebenen am Korpus, insbesondere am Backrohr, anordenbar ist, wobei die Bewegungsebenen durch das Raster der Höhenverstelleinrichtung vorgegeben sind. Durch das Raster der Höhenverstelleinrichtung ist das Schwenkorgan bzw. ein angeordnetes Trägerelement vergleichsweise schnell, einfach und präzise in verschiedene Bewegungsebenen verstellbar vorhanden.

Weiter wird vorgeschlagen, dass das Schwenkorgan eine Aufnahmeeinrichtung umfasst, wobei die Aufnahmeeinrichtung dazu ausgebildet ist, das Trägerelement anzuordnen, wobei die Aufnahmeeinrichtung an der dritten Schwenkachse beweglich zum zweiten Schwenkarm angeordnet ist. Die Aufnahmeeinrichtung ist z.B. beweglich zum zweiten Schwenkarm an der dritten Schwenkachse gelagert. Durch die Aufnahmeeinrichtung ist das Trägerelement mit dem Schwenkorgan vergleichsweise einfach koppelbar.

Denkbar ist auch, dass die Aufnahmeeinrichtung dazu ausgebildet ist mehrere Trägerelemente, insbesondere Gargutträger, beispielsweise in mehreren Bewegungsebenen, z.B. Backebenen anzuordnen, wobei die Bewegungsebenen vorteilhafterweise beabstandet und parallel ausgerichtet zueinander vorhanden sind.

Beispielsweise ist die Aufnahmeeinrichtung dazu ausgebildet das Trägerelement, insbesondere den Gargutträger aufzulegen. Denkbar ist auch, dass die Aufnahmeeinrichtung derart vorhanden ist, dass das Trägerelement an die Aufnahmeeinrichtung einhängbar ist.

Überdies ist es von Vorteil, dass die Aufnahmeeinrichtung U-förmig ausgebildet ist, wobei die U-förmige Aufnahmeeinrichtung derart vorhanden ist, dass das Trägerelement an die beiden Schenkel des U's der Aufnahmeeinrichtung anordenbar ist. Dadurch ist das Trägerelement an der Aufnahmeeinrichtung vergleichsweise einfach anordenbar.

Die Aufnahmeeinrichtung ist beispielsweise als ein U-förmiger, an einer Seite offener Rahmen vorhanden. Die beiden sich gegenüberliegend und voneinander beabstandeten Schenkel des U's sind über eine Querverstrebung an einem Ende der Schenkel miteinander verbunden. Die Schenkel sind vorteilhafterweise zueinander parallel ausgerichtet. Bevorzugterweise ist der zweite Schwenkarm, beispielsweise über die dritte Schwenkachse, insbesondere beweglich mit der Querverstrebung der Aufnahmeeinrichtung gekoppelt und/oder verbunden.

Die Querverstrebung und/oder die Schenkel sind z.B. leistenartig und/oder z.B. in einem Querschnitt L-förmig ausgebildet. Sind die Schenkel im Querschnitt L-förmig vorhanden, so kann beispielsweise das Trägerelement auf einer ersten Seitenfläche des L's aufliegend an der Aufnahmeeinrichtung anordenbar sein. Außerdem ist es vorstellbar, dass die Aufnahmeeinrichtung derart vorhanden ist, dass das auf der Aufnahmeeinrichtung aufliegend angeordnete Trägerelement durch die insbesondere senkrecht zur ersten Seitenfläche, z.B. nach oben abstehenden, zweiten Seiten der Schenkel seitlich abstützbar und/oder führbar ist.

Vorrichtung nach einem der vorangegangenen Ansprüche, dadurch gekennzeichnet, dass die Aufnahmeeinrichtung stabartig ausgebildet ist, wobei eine Längsachse der stabartigen Aufnahmeeinrichtung parallel zu der horizontalen Bewegungsebene des Schwenkorgans vorhanden ist. Hierdurch ist eine Angriffsfläche der Aufnahmeeinrichtung an einem angeordneten Trägerelement vergleichsweise vergrößert.

Vorstellbar ist auch, dass die Aufnahmeeinrichtung ein Verbindungsmittel aufweist, wobei das Trägerelement in einer Einhängebewegung, bspw. einer Schwenk- und/oder Drehbewegung, welche in einem Winkel, vorteilhafterweise senkrecht zur Bewegungsebene des Schwenkorgans verläuft, an das Verbindungsmittel, insbesondere an die Aufnahmeeinrichtung anordenbar, insbesondere einhängbar ist.

Außerdem wird vorgeschlagen, dass Führungselemente vorhanden sind, wobei die Führungselemente an inneren Seitenwänden des Korpus anordenbar sind, wobei die Führungselemente dazu vorgesehen sind, im angeordneten Zustand am Korpus eine Bewegung des Schwenkorgans, insbesondere des angeordneten Trägerelements, z.B. seitlich zu führen. Hierdurch ist ein Verkanten einer Bewegung des angeordneten Trägerelements bzw. einer Bewegung des Schwenkorgans mit angeordnetem Trägerelement vermieden.

Die Führungselemente sind beispielsweise schienenartig vorhanden. Im angeordneten Zustand des Trägerelements ist das Trägerelement z.B. an die schienenartigen Führungselemente anliegend angeordnet, insbesondere in die schienenartigen Führungselemente eingeschoben. Die Führungselemente sind beispielsweise an und/oder in die Seitenwände einhängbar ausgebildet. Die Seitenwände des Korpus umfassen beispielsweise ein Aufnahmebereich zur Aufnahme eines Führungselements. Der Aufnahmebereich ist beispielsweise als eine Öffnung und/oder Loch in der Seitenwand vorhanden. Denkbar ist auch, dass ein Führungselement und/oder eine Seitenwand in einer Weise ausgebildet ist, dass das Führungselement an die Seitenwand klemmbar ist.

Auch erweist es sich von Vorteil, dass das Schwenkorgan derart ausgebildet ist, dass ein angeordnetes Trägerelement in eine geöffnete Position am Korpus vollständig aus dem Korpus, insbesondere aus dem Backrohr des Ofens, herausbewegbar ist. Hierdurch ist das Trägerelement vergleichsweise einfach an das Schwenkorgan anordenbar oder vom Schwenkorgan entfernbar.

Vorteilhafterweise besitzt der erste Schwenkarm eine Schwenkarmlänge in einer Weise, dass die zweite Schwenkachse in einer Öffnungsbewegung des Schwenkarms im angeordneten Zustand am Korpus in eine geöffnete Stellung bewegbar ist, wobei die geöffnete Stellung sich im Bereich, z.B. einem Nahbereich der offenen Seite des Hohlraums befindet. Beispielsweise befindet sich die zweite Schwenkachse in der geöffneten Stellung außerhalb des Hohlraums, insbesondere außerhalb des Korpus. Bevorzugterweise befindet sich der zweite Schwenkarm in angeordneten Zustand am Korpus in der geöffneten Stellung außerhalb des Hohlraums, insbesondere des Korpus.

Vorstellbar ist außerdem, dass die Vorrichtung in einer Weise vorhanden und am Korpus anbringbar ist, dass z.B. ein angeordnetes Trägerelement von einer geschlossenen Stellung, in welcher sich die Vorrichtung z.B. vollständig im Korpus befindet, in eine geöffnete Stellung, beispielsweise in einer linearen Bewegung der Aufnahmeeinrichtung und/oder in einer linearen Bewegung des Trägerelements, außerhalb des Hohlraums des Korpus, insbesondere außerhalb des Korpus bewegbar ist. Vorteilhafterweise ist die Vorrichtung bspw. mit dem Trägerelement in der geschlossenen Stellung insbesondere vollständig im Hohlraum des Korpus vorhanden.

Weiter wird vorgeschlagen, dass das Schwenkorgan in einer Weise ausgebildet ist, dass ein angeordnetes Trägerelement ausgehend von der geöffneten Position in seiner horizontalen Bewegungsebene in einer Richtung senkrecht zur Öffnungsrichtung verschiebbar und/oder verschwenkbar ist. Hierdurch ist das Trägerelement aus einem Zugangsbereich der Öffnung des Korpus wegbewegbar, insbesondere im angeordneten Zustand an der Vorrichtung.

Denkbar ist, dass zumindest ein Teil des zweiten Schwenkarms und/oder das Trägerelement in der geöffneten Stellung seitlich versetzt zum Korpus vorhanden ist. In der geöffneten Stellung ist die Vorrichtung, insbesondere ein Schwenkarm und/oder das Trägerelement, vorteilhafterweise in eine Position bewegt, sodass ein Zugang zum Hohlraum des Korpus nicht begrenzt und/oder beschränkt ist. Beispielsweise kann die Aufnahmeeinrichtung, insbesondere mit dem angeordneten Trägerelement zunächst aus der geschlossenen Stellung in eine erste geöffnete Stellung außerhalb des Korpus bewegbar sein, insbesondere in einer linearen Bewegung, und anschließend ist die Aufnahmeeinrichtung, insbesondere mit angeordnetem Trägerelement, in einer Schwenk- und/oder Drehbewegung in eine zweite geöffnete Stellung bringbar, wobei die zweite geöffnete Stellung sich vorteilhafterweise seitlich versetzt zur Öffnung des Korpus und/oder seitlich benachbart zur ersten geöffneten Stellung befindet.

Eine weitere vorteilhafte Variante der Erfindung ist ein Möbel mit einem Trägerelement, wobei das Trägerelement ein Führungsorgan aufweist, wobei das Führungsorgan dazu ausgebildet ist, das Trägerelement im angeordneten Zustand an der Vorrichtung und am Korpus, insbesondere am Ofen, bei einer Bewegung der Vorrichtung seitlich am Korpus, insbesondere am Backrohr des Ofens, zu führen.

Bevorzugterweise umfasst das Trägerelement zwei Führungsorgane. Vorstellbar ist, dass die beiden Führungsorgane voneinander beabstandet und sich gegenüberliegend am Trägerelement, insbesondere am Gargutträger, vorhanden sind. Ein Führungsorgan umfasst beispielsweise Führungsmittel, um im angeordneten Zustand des Trägerelements an der Vorrichtung, das Trägerelement an einer Seitenwand des Korpus abzustützen. Beispielsweise ist das Trägerelement im angeordneten Zustand zwischen zwei Seitenwänden des Korpus vorhanden und die beiden Führungsorgane stützen das Trägerelement an dem beiden sich gegenüberliegenden Seitenwänden des Korpus ab.

### Beschreibung der Ausführungsbeispiele

Mehrere Ausführungsbeispiele werden anhand der nachfolgenden, schematischen Zeichnungen unter Angabe weiterer Einzelheiten und Vorteile näher erläutert:
Es zeigen:
- Figur 1: eine perspektivische Ansicht von schräg vorne auf einen Korpus in Form eines Backrohrs mit einer erfindungsgemäßen Vorrichtung und einem angeordneten Trägerelement in Form eines Backblechs,
- Figur 2: eine Querschnittsansicht des Korpus aus Figur 1 in einer Draufsicht auf den Korpus,
- Figur 3: eine Querschnittsansicht eines Korpus in einer Draufsicht, wobei eine weitere Vorrichtungsvariante am Korpus vorhanden ist,
- Figuren 4 bis 9: in einer perspektivischen Ansicht von schräg vorne auf den Korpus aus Figur 1, ein möglicher Bewegungsablauf einer an den Korpus angeordneten Vorrichtung bzw. des Trägerelements und
- Figuren 10 und 11: ein Ablauf eines Anbringvorgangs eines Trägerelements an eine an einen Korpus angeordnete Vorrichtung aus einer seitlichen Ansicht und aus einer perspektivischen Ansicht von schräg vorne.

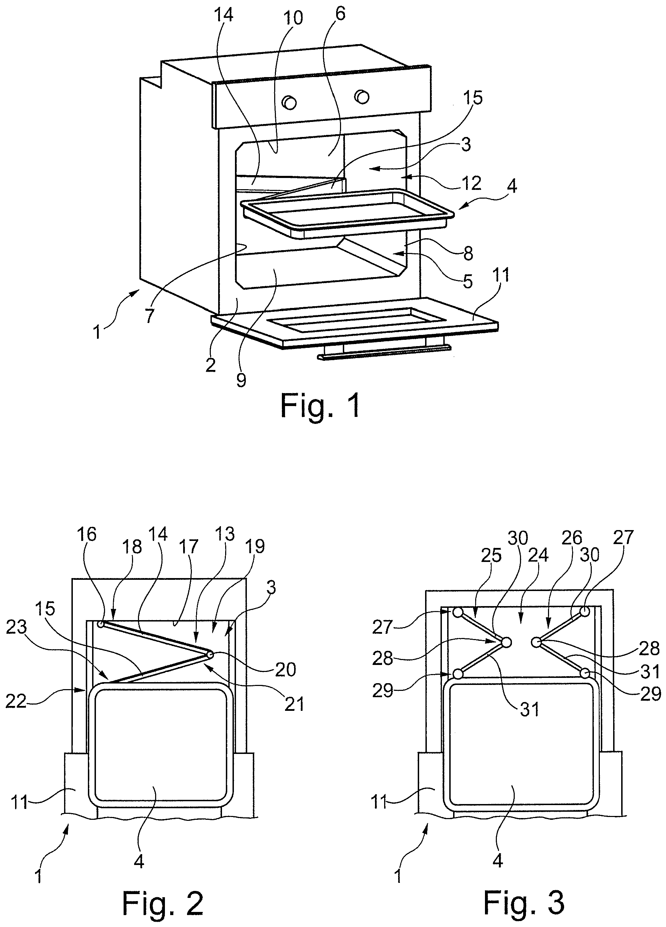

Figur 1 zeigt einen Ofen 1 mit einem Backrohr 2, eine im Backrohr 2 angeordnete, erfindungsgemäße Vorrichtung 3, an welcher ein Trägerelement in Form eines Backblechs 4 angebracht ist.

Das Backrohr 2 umfasst einen Hohlraum 5, welcher zum Beispiel zur Aufnahme eines Backblechs 4 vorgesehen ist. Der Hohlraum 5 ist an fünf Seiten durch eine Rückwand 6, eine erste Seitenwand 7, eine zweite Seitenwand 8, eine Unterseite 9 und eine Oberseite 10 begrenzt. Der Hohlraum 5 ist vorteilhafterweise als Quader und/oder Kubus ausgebildet. An einer sechstens Seite umfasst der Hohlraum 5 eine Öffnung 12, welche durch eine Ofentür 11 begrenzbar ist. Die Ofentür 11 ist vorteilhafterweise bewegbar, insbesondere schwenkbar am Ofen 1 montiert, wobei die Ofentür 11 aus einer geschlossenen Position am Ofen 1, in welcher die Ofentür 11 den Hohlraum 5 begrenzt, in eine geöffnete Position am Ofen 1 bewegbar ist, wobei die Öffnung 12 des Hohlraums 5 im geöffneten Zustand der Ofentür 11 insbesondere vollständig freigegeben bzw. zugänglich ist.

In den Figuren 2 und 3 ist der Ofen 1 in einer Draufsicht gezeigt, wobei ein Querschnitt des Ofens 1 dargestellt ist, man also durch die in den Figuren 2 und 3 nicht dargestellte Oberseite 10 in den Hohlraum 5 des Backrohrs 2 sieht.

In Figur 2 ist die Vorrichtung 3 aus Figur 1 gezeigt. Die Vorrichtung 3 umfasst ein Schwenkorgan 13, wobei das Schwenkvorgang 13 einen ersten Schwenkarm 14 und einen zweiten Schwenkarm 15 aufweist. Das Schwenkorgan 13 ist mit einem ersten Ende 18 des ersten Schwenkarms 14 über eine erste Schwenkachse 16 schwenkbar in einem hinteren Bereich des Backrohrs 2 an einer Innenseite 17 der Rückwand 6 befestigt. Vorteilhafterweise ist die erste Schwenkachse 16 in einem Eckbereich des Backrohrs 2 anordenbar. Beispielsweise in einem Eckbereich, welcher durch die Rückwand 6 und eine Seitenwand 7, 8 gebildet ist. Denkbar ist auch, dass das Schwenkorgan 13 an der Rückwand 6 und an einer Seitenwand 7, 8 befestigbar ist. An einem zweiten Ende 19 ist der erste Schwenkarm 14 über eine zweite Schwenkachse 20 schwenkbar mit einem ersten Ende 21 des zweiten Schwenkarms 15 verbunden. Das an die Vorrichtung 3 angeordnete Backblech 4 ist mittels einer dritten Schwenkachse 22 des Schwenkorgans 13 (in Figur 2 unterhalb des Backblechs 4 vorhanden und deshalb nicht sichtbar) beweglich, insbesondere schwenkbar mit einem zweiten Ende 23 des zweiten Schwenkarms 15 gekoppelt.

Figur 3 zeigt eine weitere Vorrichtungsvariante 24, wobei die Vorrichtung 24 zwei Schwenkorgane 25, 26 umfasst, welche bevorzugterweise identisch vorhanden sind und im angeordneten Zustand am Backrohr 2 zueinander spiegelsymmetrisch ausgebildet sind. Ein erstes Schwenkorgan 25 ist an einem ersten Eckbereich des Backrohrs 2 an der Innenseite 17 der Rückwand 6 angeordnet und ein zweites Schwenkorgan 26 ist getrennt vom ersten Schwenkorgan 25 und beabstandet zum ersten Schwenkorgan 25 an einem zweiten Eckbereich des Backrohrs 2 an der Innenseite 17 der Rückwand 6 angebracht. Beide Schwenkorgane 25, 26 sind ähnlich, insbesondere identisch zum Schwenkorgan 13 der Vorrichtung 3 vorhanden und umfassen drei Schwenkachsen 27 - 29 und zwei Schwenkarme 30, 31. Außerdem sind die beiden Schwenkorgane 25, 26 derart an der Rückwand 6 angeordnet, dass die Schwenkorgane 25, 26 bzw. die Schwenkarme 30, 31 der Schwenkorgane 25, 26 eine einzige gemeinsame Bewegungsebene besitzen, welche insbesondere horizontal ausgerichtet ist, zum Beispiel parallel zur Unterseite 9 und/oder zur Oberseite 10 des Backrohrs 2. Außerdem gezeigt ist, dass die beiden Schwenkorgane 25, 26 über dritte Schwenkachsen 29 mit ihren zweiten Schenkarmen 31 im angeordneten Zustand des Backblechs 4 schwenkbar bzw. drehbar mit dem Backblech 4 koppeln.

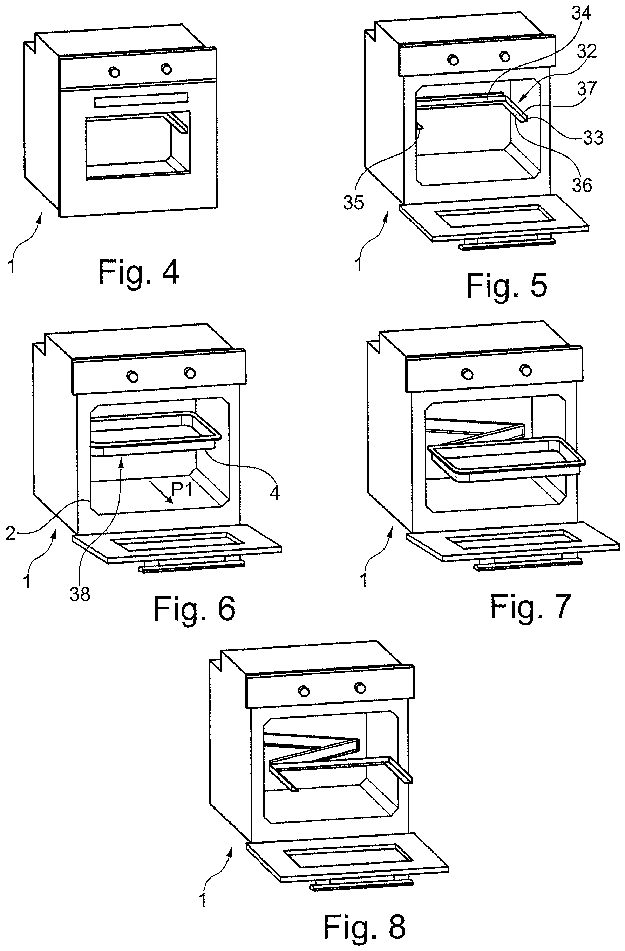

In den Figuren 4 bis 10 ist ein Nutzungsablauf der Vorrichtung 3 mit Backblech 4 gezeigt.

In Figur 4 ist der Ofen 1 mit angeordneter Vorrichtung 3 gezeigt, wobei die Ofentür 11 sich in der geschlossenen Position befindet.

In Figur 5 befindet sich die Ofentür 11 in der geöffneten Position und die Vorrichtung 3 in einer insbesondere vollständig in das Backrohr 2 hineinbewegten Position. Außerdem ist eine Aufnahmeeinrichtung 32 der Vorrichtung 3 gezeigt. Die Aufnahmeeinrichtung 32 ist über die dritte Schwenkachse 22 schwenkbar mit dem zweiten Schwenkarm 15 gekoppelt. Die Aufnahmeeinrichtung 32 ist U-förmig ausgebildet. Streben 33 - 35 der U-förmigen Aufnahmeeinrichtung 32 sind vorteilhafterweise L-förmig vorhanden. Hierdurch ist die Aufnahmeeinrichtung 32 zum einen stabil ausgebildet, zum anderen bilden die Streben 33 - 35 mit einer ersten Seite 36 eine Auflagefläche für das Backblech 4, um das Backblech 4 auf die Auflagefläche aufzulegen, und mit einer winklig zur ersten Seite 36 vorhandenen zweiten Seite 37 eine Anschlagfläche, wodurch das Backblech 4 an drei Seiten an der Aufnahmeeinrichtung 32 gehalten ist.

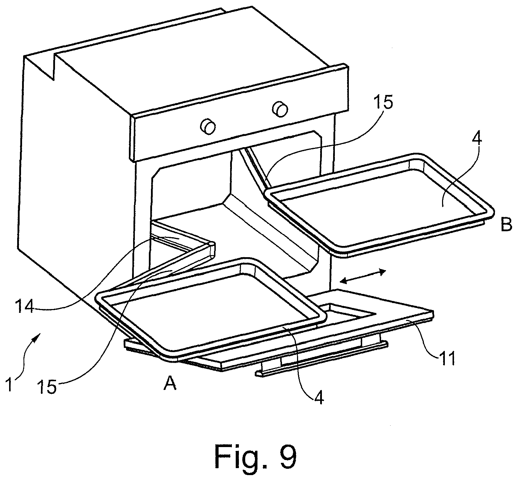

In Figur 6 ist das Backblech 4 auf die Aufnahmeeinrichtung 32 aufgelegt im Backrohr 2 des Ofens 1 vorhanden. Im aufgelegten Zustand ist das Backblech 4 durch die Vorrichtung 3 gehalten und durch einen Nutzer in eine geöffnete Stellung am Backrohr 2 bewegbar, z.B. indem der Nutzer das Backblech 4 an einem vorderen Seitenbereich 38 ergreift und in eine Öffnungsrichtung P1 aus dem Backrohr 2 herauszieht. Das Backblech 4 wird hierbei durch die Vorrichtung 3 in seiner horizontalen Position gehalten, wobei die Schwenkarme 14, 15 sich aus einer zusammengefalteten Stellung, aus der insbesondere vollständig in das Backrohr 2 hineinbewegten Position, in eine geöffnete Stellung, zum Beispiel ziehharmonikamäßig, entfalten (Figur 7). In der geöffneten Stellung des Backblechs 4 am Backrohr 2 ist es einem Nutzer möglich, dass Backblech 4 vergleichsweise einfach aus der Vorrichtung 3 bzw. der Aufnahmeeinrichtung 32 wegzubewegen, zum Beispiel herauszubewegen oder abzuheben (Figur 8). Auch kann ein Nutzer das Backblech 4 geführt durch die Vorrichtung 3 ausgehend von der geöffneten Stellung (Figur 7) in eine weitere geöffnete Stellung seitlich zum Backrohr 2 verschieben (Figur 9), z.B. in einer Schiebebewegung des Backblechs 4. In Figur 9 sind beispielhaft zwei mögliche, geöffnete Stellungen A, B des Backblechs 4 gezeigt, in welche z.B. das Backblech 4 seitlich zum Backrohr 2 verschoben werden kann.

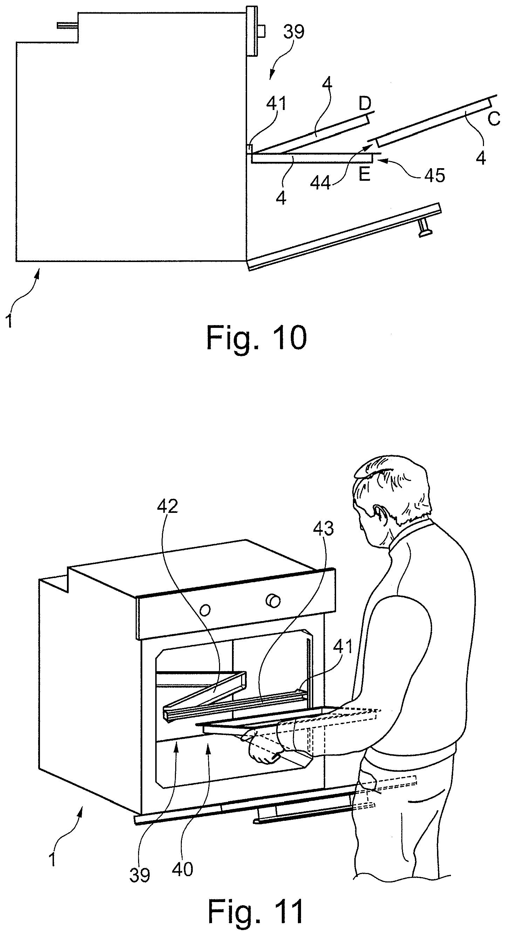

In den Figuren 10 und 11 ist eine weitere Vorrichtungsvariante 39 im angeordneten Zustand am Ofen 1 gezeigt. Die Vorrichtung 39 umfasst, insbesondere identisch zu der Vorrichtung 13, ein Schwenkorgan 40, welches drei Schwenkachse und zwei Schwenkarme aufweist. Im Unterschied zur Vorrichtung 13 umfasst das Schwenkorgan 40 der Vorrichtung 39 eine weitere Variante einer Aufnahmeeinrichtung 41. Die Aufnahmeeinrichtung 41 ist über eine Schwenkachse des Schwenkorgans 40 schwenkbar mit einem zweiten Schwenkarm 42 gekoppelt. Die Aufnahmeeinrichtung 41 ist stabförmig vorhanden und besitzt eine im angeordneten Zustand der Vorrichtung 3 am Backrohr 2 in Öffnungsrichtung vorhandene Anbringlippe 43. Eine Längsachse der Aufnahmeeinrichtung 41 ist im angeordneten Zustand der Vorrichtung 39 am Ofen 1 bevorzugterweise parallel zur Rückwand 6 ausgerichtet. Die Anbringlippe 43 erstreckt sich beispielsweise entlang der Längsachse der Aufnahmeeinrichtung 41.

Die Anbringlippe 43 ist beispielsweise derart ausgebildet, dass das Backblech 4 mit einer Randseite 44 in einer Schwenkbewegung von schräg oben an die Anbringlippe 43 einhängbar ist (Figur 10). In Figur 10 ist ein Einhängvorgang des Backblechs 4 beispielhaft dargestellt. Das Backblech 4 ist hierzu in drei Positionen C, D, E abgebildet. Position C zeigt das Backblech 4 leicht angewinkelt zur horizontalen Bewegungsebene der Vorrichtung 39 vor dem Ofen 1 (siehe hierzu auch Figur 11). In Position D ist das Backblech 4 in der leicht angewinkelten Position an die Aufnahmeeinrichtung 41 herangeführt an der Anbringlippe 43 vorhanden und in Position E ist das Backblech 4 in horizontaler Position ausgerichtet an die Anbringlippe 43, durch eine Schwenkbewegung der Randseite 45 des Backblechs 4 nach unten, eingehängt, wobei die Randseite 45 der Randseite 44 gegenüberliegend vorhandenen ist.

**Bezugszeichenliste**

| | | | |
|---|---|---|---|
| 1 | Ofen | 24 | Vorrichtung |
| 2 | Backrohr | 25 | Schwenkorgan |
| 3 | Vorrichtung | 26 | Schwenkorgan |
| 4 | Backblech | 27 | Schwenkachse |
| 5 | Hohlraum | 28 | Schwenkachse |
| 6 | Rückwand | 29 | Schwenkachse |
| 7 | Seitenwand | 30 | Schwenkarm |
| 8 | Seitenwand | 31 | Schwenkarm |
| 9 | Unterseite | 32 | Aufnahmeeinrichtung |
| 10 | Oberseite | 33 | Strebe |
| 11 | Ofentür | 34 | Strebe |
| 12 | Öffnung | 35 | Streben |
| 13 | Schwenkorgan | 36 | Seite |
| 14 | Schwenkarm | 37 | Seite |
| 15 | Schwenkarm | 38 | Bereich |
| 16 | Schwenkachse | 39 | Vorrichtung |
| 17 | Innenseite | 40 | Schwenkorgan |
| 18 | Ende | 41 | Aufnahmeeinrichtung |
| 19 | Ende | 42 | Schwenkarm |
| 20 | Schwenkachse | 43 | Anbringlippe |
| 21 | Ende | 44 | Randseite |
| 22 | Schwenkachse | 45 | Randseite |
| 23 | Ende | | |

## Patentansprüche

1. Möbel mit einem Korpus und mit einer Vorrichtung (3, 24, 39) zur Anbringung eines Trägerelements für Gegenstände im Korpus des Möbels, insbesondere Ofen (1) mit einer Vorrichtung zur Anbringung eines Gargutträgers (4) in dem Ofen (1), wobei die Vorrichtung (3, 24, 39) ein Schwenkorgan (13, 25, 26, 40) zur Anordnung des Trägerelements und Anbringmittel aufweist, wobei mit den Anbringmittel das Schwenkorgan (13, 25, 26, 40) im Korpus an einem Wandabschnitt des Korpus angebracht ist, wobei das Schwenkorgan (13, 25, 26, 40) zwei Schwenkarme (14, 15) umfasst, welche zueinander drehbar vorhanden sind, wobei das Schwenkorgan (13, 25, 26, 40) drei Schwenkachsen (16, 20, 22) aufweist, wobei ein erster Schwenkarm (14) durch eine erste Schwenkachse (16) drehbar am Korpus angeordnet ist, wobei die beiden Schwenkarme (14, 15) über eine zweite Schwenkachse (20) drehbar aneinander angeordnet sind, wobei an einem zweiten Schwenkarm (15) eine dritte Schwenkachse (22) vorhanden ist, wobei im Bereich eines Endes (23) des zweiten Schwenkarms (15) das Trägerelement (4) durch die dritte Schwenkachse (22) drehbar zum zweiten Schwenkarm (15) anordenbar ist, wobei die Schwenkachsen (16, 20, 22) parallel zu einer Seitenwand (7, 8) und der Rückwand (6) ausgerichtet sind, und wobei bei einer Schwenk- und/oder Schiebebewegung des Schwenkorgans (13, 25, 26, 40) ein daran angeordnetes Trägerelement (4) in einer einzigen ausschließlich horizontalen Bewegungsebene bewegbar ist, wodurch das an das Schwenkorgan (13, 25, 26, 40) angeordnete Trägerelement (4) sich in einen Hohlraum (5) des Korpus hinein oder aus diesem heraus bewegen lässt, **dadurch gekennzeichnet, dass** das Schwenkorgan (13, 25, 26, 40) mit einem ersten Ende (18) des ersten Schwenkarms (14) an einer Höhenverstelleinrichtung der Vorrichtung (3, 24, 39) montiert ist, wobei die Höhenverstelleinrichtung ein Raster aufweist, sodass das Schwenkorgan (13, 25, 26, 40) in verschiedenen Bewegungsebenen am Korpus anordenbar ist, wobei die Bewegungsebenen durch das Raster der Höhenverstelleinrichtung vorgegeben sind.

2. Möbel (1) nach einem der vorangegangenen Ansprüche, **dadurch gekennzeichnet, dass** das Schwenkorgan (13, 25, 26, 40) mit einem ersten Ende (18) des ersten Schwenkarms (14) in einem hinteren Drittel eines Hohlraums (5) des Korpus, insbesondere im hinteren Drittel eines Backrohrs des Ofens angeordnet ist.

3. Möbel (1) nach einem der vorangegangenen Ansprüche, **dadurch gekennzeichnet, dass** die Vorrichtung (3, 24, 39), insbesondere das Schwenkorgan (13, 25, 26, 40) Dämpfungsmittel aufweist, um eine Bewegung der Vorrichtung (3, 24, 39), insbesondere des angeordneten Trägerelements (4), zu dämpfen.

4. Möbel (1) nach einem der vorangegangenen Ansprüche, **dadurch gekennzeichnet, dass** zwei Schwenkorgane (25, 26) vorhanden sind, welche zueinander spiegelsymmetrisch am Korpus anordenbar ausgebildet sind.

5. Möbel (1) nach einem der vorangegangenen Ansprüche, **dadurch gekennzeichnet, dass** das Schwenkorgan (13, 25, 26, 40) eine Parallelogrammführung umfasst.

6. Möbel (1) nach einem der vorangegangenen Ansprüche, **dadurch gekennzeichnet, dass** das Schwenkorgan (13, 25, 26, 40) eine Aufnahmeeinrichtung (32, 41) umfasst, wobei die Aufnahmeeinrichtung (32, 41) dazu ausgebildet ist, das Trägerelement (4) anzuordnen, wobei die Aufnahmeeinrichtung (32, 41) an der dritten Schwenkachse (22, 29) beweglich zum zweiten Schwenkarm (15, 31) angeordnet ist.

7. Möbel (1) nach dem vorangegangenen Anspruch 6, **dadurch gekennzeichnet, dass** die Aufnahmeeinrichtung (32) U-förmig ausgebildet ist, wobei die U-förmige Aufnahmeeinrichtung (32) derart vorhanden ist, dass das Trägerelement (4) an die beiden Schenkel (33, 35) des U's der Aufnahmeeinrichtung (32) anordenbar ist.

8. Möbel (1) nach dem vorangegangenen Anspruch 6, **dadurch gekennzeichnet, dass** die Aufnahmeeinrichtung (41) stabartig ausgebildet ist, wobei eine Längsachse der stabartigen Aufnahmeeinrichtung (41) parallel zu der horizontalen Bewegungsebene des Schwenkorgans (13, 25, 26, 40) vorhanden ist.

9. Möbel (1) nach einem der vorangegangenen Ansprüche, **dadurch gekennzeichnet, dass** Führungselemente vorhanden sind, wobei die Führungselemente an inneren Seitenwänden (7, 8) des Korpus anordnet sind, wobei die Führungselemente dazu vorgesehen sind, eine Bewegung des Schwenkorgans (13, 25, 26, 40), insbesondere des angeordneten Trägerelements (4), zu führen.

10. Möbel (1) nach einem der vorangegangenen Ansprüche, **dadurch gekennzeichnet, dass** das Schwenkorgan (13, 25, 26, 40) derart ausgebildet ist, dass ein angeordnetes Trägerelement (4) in eine geöffnete Position am Korpus vollständig aus dem Korpus, insbesondere aus dem Backrohr des Ofens, herausbewegbar ist.

11. Möbel (1) nach einem der vorangegangenen Ansprüche, **dadurch gekennzeichnet, dass** das Schwenkorgan (13, 25, 26, 40) in einer Weise ausgebildet ist, dass ein angeordnetes Trägerelement (4) ausgehend von der geöffneten Position in seiner horizontalen Bewegungsebene in einer Richtung senkrecht zur Öffnungsrichtung verschiebbar und/oder verschwenkbar ist.

12. Möbel (1) nach einem der vorangegangenen Ansprüche mit einem Trägerelement (4), wobei das Trägerelement (4) ein Führungsorgan aufweist, wobei das Führungsorgan dazu ausgebildet ist, das Trägerelement (4) im angeordneten Zustand an der Vorrichtung (3, 24, 39) und am Korpus, insbesondere am Ofen, bei einer Bewegung der Vorrichtung (3, 24, 39) seitlich am Korpus, insbesondere am Backrohr des Ofens, zu führen.

13. Möbel (1), insbesondere Herd oder Ofen nach einem der vorangegangenen Ansprüche, **dadurch gekennzeichnet, dass** der Korpus, insbesondere das Backrohr (2) des Ofens (1), an einer inneren Seitenwand (7, 8), insbesondere an inneren Seitenwänden, Führungselemente aufweist, welches dazu ausgebildet ist, eine Bewegung eines angeordneten Trägerelements (4), insbesondere Gargutträgers zu führen.

## Claims

1. Furniture with a body and with a device (3, 24, 39) for attaching a carrier element for objects in the body of the furniture, in particular stove (1) with a device for attaching a food carrier (4) in the stove (1), wherein the device (3, 24, 39) has a pivoting member (13, 25, 26, 40) for arranging the carrier element and attachment means, wherein by means of the attachment means the pivoting member (13, 25, 26, 40) is attached in the body (1) on a wall section of the body, wherein the pivoting member (13, 25, 26, 40) comprises two pivot arms (14, 15) which are rotatable relative to one another, wherein the pivoting member (13, 25, 26, 40) has three pivot axes (16, 20, 22), wherein a first pivot arm (14) is arranged rotatably on the body by a first pivot axis (16), wherein the two pivot arms (14, 15) are arranged rotatably on one another via a second second pivot axis (20), wherein on a second pivot arm (15) a third pivot axis (22) is provided, wherein in the region of one end (23) of the second pivot arm (15) the carrier element (4) can be arranged by the third pivot axis (22) rotatably to the second pivot arm (15), wherein the pivot axes (16, 20, 22) are aligned parallel to a side wall (7, 8) and the rear wall (6), and wherein during a pivoting and/or pushing movement of the pivoting member (13, 25, 26, 40) a carrier element (4) arranged thereon can be moved in a single exclusively horizontal plane of movement, whereby the carrier element (4) arranged on the pivot member (13, 25, 26, 40) can be moved into a cavity (5) of the body or out of the latter, **characterised in that** the pivoting member (13, 25, 26, 40) is mounted at a first end (18) of the first pivot arm (14) on a vertical adjustment device of the device (3, 24, 39), wherein the vertical adjustment device has a grid so that the pivoting member (13, 25, 26, 40) can be arranged in different planes of movement on the body, wherein the planes of movement are predefined by the grid of the vertical adjustment device.

2. Furniture (1) according to any of the preceding claims, **characterised in that** the pivoting member (13, 25, 26, 40) is arranged with a first end (18) of the first pivot arm (14) in a rear third of a cavity (5) of the body, in particular in the rear third of an oven of the stove.

3. Furniture (1) according to any of the preceding claims, **characterised in that** the device (3, 24, 39), in particular the pivoting member (13, 25, 26, 40) comprises damping means for damping a movement of the device (3, 24, 39), in particular the arranged carrier element (4).

4. Furniture (1) according to any of the preceding claims, **characterised in that** two pivoting members (25, 26) are provided which are designed to be arranged mirror symmetrically to one another on the body.

5. Furniture (1) according to any of the preceding claims, **characterised in that** the pivoting member (13, 25, 26, 40) comprises a parallelogram guide.

6. Furniture (1) according to any of the preceding claims, **characterised in that** the pivoting member (13, 25, 26, 40) comprises a receiving device (32, 41), wherein the receiving device (32, 41) is designed to arrange the carrier element (4), wherein the receiving device (32, 41) is arranged on the third pivot axis (22, 29) to be movable relative to the second pivot arm (15, 31).

7. Furniture (1) according to the preceding claim 6, **characterised in that** the receiving device (32) is designed to be U-shaped, wherein the U-shaped receiving device (32) is provided such that the carrier element (4) can be arranged on both legs (33, 35) of the U of the receiving device (32).

8. Furniture (1) according to preceding claim 6, **characterised in that** the receiving device (41) is designed to be rod-like, wherein a longitudinal axis of the rod-like receiving device (41) is provided parallel to the horizontal plane of movement of the pivoting member (13, 25, 26, 40).

9. Furniture (1) according to any of the preceding claims, **characterised in that** guiding members are provided, wherein the guiding members are arranged on inner side walls (7, 8) of the body, wherein the guiding members are provided to guide a movement of the pivoting member (13, 25, 26, 40), in particular the arranged carrier element (4).

10. Furniture (1) according to any of the preceding claims, **characterised in that** the pivoting member (13, 25, 26, 40) is designed such that an arranged carrier element (4) can be moved out into an opened position on the body fully out of the body, in particular out of the oven of the stove.

11. Furniture (1) according to any of the preceding claims, **characterised in that** the pivoting member (13, 25, 26, 40) is designed in such a way that an arranged carrier element (4) can be moved and/or pivoted from the opened position in its horizontal plane of movement in a direction perpendicular to the opening direction.

12. Furniture (1) according to any of the preceding claims with a carrier element (4), wherein the carrier element (4) has a guiding member, wherein the guiding member is designed to guide the carrier element (4) in the arranged state on the device (3, 24, 39) and on the body (1), in particular on the stove, with a movement of the device (3, 24, 39) on the side of the body (1), in particular on the oven of the stove.

13. Furniture (1), in particular a cooker or stove according to any of the preceding claims, **characterised in that** the body, in particular the oven (2) of the stove (1), on an inner side wall (7, 8), in particular on inner side walls, has guiding members which are designed to guide a movement of an arranged carrier element (4), in particular food carrier.

## Revendications

1. Meuble avec un corps de meuble et avec un dispositif (3, 24, 39) pour fixer un élément support pour des objets dans le corps du meuble, en particulier four (1) avec un dispositif pour fixer un support de produits à cuire (4) dans le four (1), le dispositif (3, 24, 39) étant muni d'un organe pivotant (13, 25, 26, 40) pour installer l'élément support et de moyens de fixation, l'organe pivotant (13, 25, 26, 40) étant monté dans le corps de meuble sur une section de paroi du corps de meuble avec les moyens de fixation, l'organe pivotant (13, 25, 26, 40) comprenant deux bras pivotants (14, 15) qui peuvent tourner l'un par rapport à l'autre, l'organe pivotant (13, 25, 26, 40) ayant trois axes de pivotement (16, 20, 22), un premier bras pivotant (14) étant disposé rotatif sur le corps de meuble par un premier axe de pivotement (16), les deux bras pivotants (14, 15) étant disposés rotatifs entre eux par un deuxième axe de pivotement (20), un troisième axe de pivotement (22) étant prévu sur un deuxième bras pivotant (15), l'élément support (4) pouvant être disposé au moyen du troisième axe de pivotement (22) dans la zone d'une extrémité (23) du deuxième bras pivotant (15) en étant rotatif par rapport au deuxième bras pivotant (15), les axes de pivotement (16, 20, 22) étant orientés parallèlement à une paroi latérale (7, 8) et à la paroi arrière (6), et un élément support (4) disposé sur l'organe pivotant (13, 25, 26, 40) n'étant mobile que dans un seul plan de mouvement exclusivement horizontal lors d'un mouvement de pivotement et/ou de coulissement dudit organe pivotant, de sorte que l'élément support (4) relié à l'organe pivotant (13, 25, 26, 40) peut être rentré ou sorti d'une cavité (5) du corps de meuble, **caractérisé en ce que** l'élément pivotant (13, 25, 26, 40) est monté par une première extrémité (18) du premier bras pivotant (14) à un dispositif de réglage de la hauteur du dispositif (3, 24, 39), le dispositif de réglage de la hauteur étant muni d'une grille de sorte que l'organe pivotant (13, 25, 26, 40) peut être installé sur le corps de meuble dans différents plans de mouvement, les plans de mouvement étant prédéterminés par la grille du dispositif de réglage de la hauteur.

2. Meuble (1) selon l'une des revendications précédentes, **caractérisé en ce que** l'organe pivotant (13, 25, 26, 40) est disposé avec une première extrémité (18) du premier bras pivotant (14) dans un tiers arrière d'une cavité (5) du corps de meuble, en particulier dans le tiers arrière d'une cavité de four du four.

3. Meuble (1) selon l'une des revendications précédentes, **caractérisé en ce que** le dispositif (3, 24, 39), en particulier l'organe pivotant (13, 25, 26, 40), est muni de moyens d'amortissement pour amortir un mouvement du dispositif (3, 24, 39), en particulier de l'élément support (4).

4. Meuble (1) selon l'une des revendications précédentes, **caractérisé en ce qu'**il est prévu deux éléments pivotants (25, 26) lesquels sont conçus pour être disposés sur le corps de meuble de manière symétrique l'un par rapport à l'autre.

5. Meuble (1) selon l'une des revendications précédentes, **caractérisé en ce que** l'organe pivotant (13, 25, 26, 40) comprend un guidage par parallélogramme.

6. Meuble (1) selon l'une des revendications précédentes, **caractérisé en ce que** l'organe pivotant (13, 25, 26, 40) comprend un dispositif de réception (32, 41), le dispositif de réception (32, 41) étant conçu pour installer l'élément support (4), le dispositif de réception (32, 41) étant disposé sur le troisième axe de pivotement (22, 29) en étant mobile par rapport au deuxième bras pivotant (15, 31).

7. Meuble (1) selon la revendication précédente 6, **caractérisé en ce que** le dispositif de réception (32) est en forme de U, le dispositif de réception (32) en forme de U étant présent de telle sorte que l'élément support (4) peut être disposé sur les deux branches (33, 35) du U du dispositif de réception (32).

8. Meubles (1) selon la revendication précédente 6, **caractérisé en ce que** le dispositif de réception (41) est en forme de tige, un axe longitudinal du dispositif de réception (41) en forme de tige étant parallèle au plan de déplacement horizontal de l'organe pivotant (13, 25, 26, 40).

9. Meuble (1) selon l'une des revendications précédentes, **caractérisé en ce que** des éléments de guidage sont présents, les éléments de guidage étant disposés sur des parois latérales intérieures (7, 8) du corps de meuble, les éléments de guidage étant prévus pour guider un mouvement de l'organe pivotant (13, 25, 26, 40), en particulier de l'élément support (4) installé.

10. Meuble (1) selon l'une des revendications précédentes, **caractérisé en ce que** l'organe pivotant (13, 25, 26, 40) est conçu de telle sorte que, dans une position ouverte sur le corps de meuble, un élément support (4) installé peut être sorti complètement hors du corps de meuble, en particulier hors de la cavité du four.

11. Meuble (1) selon l'une des revendications précédentes, **caractérisé en ce que** l'organe pivotant (13, 25, 26, 40) est conçu de telle sorte qu'un élément support (4) installé peut, à partir de la position ouverte, être déplacé et/ou pivoté dans son plan de déplacement horizontal dans une direction perpendiculaire à la direction d'ouverture.

12. Meuble (1) selon l'une des revendications précédentes avec un élément support (4), l'élément support (4) étant muni d'un organe de guidage, l'organe de guidage étant conçu pour guider l'élément support (4), à l'état installé sur le dispositif (3, 24, 39) et sur le corps de meuble, en particulier sur le four, lors d'un mouvement du dispositif (3, 24, 39) latéralement au corps de meuble, en particulier à la cavité du four.

13. Meuble (1), en particulier cuisinière ou four selon l'une des revendications précédentes, **caractérisé en ce que** le corps de meuble, en particulier la cavité de four (2) du four (1), est muni d'éléments de guidage sur une paroi latérale intérieure (7, 8), en particulier sur des parois latérales intérieures, lesquels sont conçus pour guider un mouvement d'un élément support (4) installé, en particulier un support de produits à cuire.
